(19)

Europäisches
Patentamt

European
Patent Office

Office européen
des brevets

(11) **EP 3 382 630 A1**

(12) **EUROPEAN PATENT APPLICATION**

(43) Date of publication:
03.10.2018 Bulletin 2018/40

(51) Int Cl.:
*G06Q 30/02* (2012.01)      *G06Q 30/06* (2012.01)
*G06F 17/30* (2006.01)      *G06K 9/00* (2006.01)

(21) Application number: 17163734.1

(22) Date of filing: 30.03.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(71) Applicant: FUJITSU LIMITED
Kawasaki-shi,
Kanagawa 211-8588 (JP)

(72) Inventors:
• GEORGESCU, Serban
London, W5 3JY (GB)
• CHOW, Peter
Gillingham, Kent ME7 3AH (GB)
• SAKAIRI, Makoto
Kawasaki-shi, Kanagawa 211-8588 (JP)

(74) Representative: Haseltine Lake LLP
Lincoln House, 5th Floor
300 High Holborn
London WC1V 7JH (GB)

(54) **AUTOMATIC RETRIEVAL OF MANUFACTURE-RELATED INFORMATION RELATING TO A PRODUCT**

(57)     A method of providing requested manufacture-related information, such as a recommended best manufacturing process or a price quotation relating to a desired product, comprises: providing a database of 3D items, the database comprising at least geometric information specifying the geometry of each item; receiving product information specifying the desired product, the information comprising at least geometric information specifying the geometry of the product; using at least the geometric information of the items and the received product information to determine which item in the database is the most similar to the desired product; and retrieving stored information relating to manufacture of the item determined to be most similar to the desired product, and using the retrieved information to provide the requested manufacture-related information.

Figure 1(a)

**Description**

Embodiments of the present invention relate to automatic retrieval of manufacture-related information relating to a product of interest.

Automatic recommendation systems provide a very convenient way of extracting relevant information from large datasets. Examples of such systems are those provided by online shopping sites such as Amazon™ or eBay™ or content sites such as Netflix™.

Quotation systems are very convenient to users as 'they provide them with almost instant information and thus enable quick decisions. Today many such systems are encountered in everyday life, for example when shopping for a mortgage, insurance, a desktop or laptop computer, etc. They are also convenient for the product provider as they lower the cost of creating a quote and thus allow the provider to serve an increased number of customers.

Focusing on the field of manufacturing, both such systems are often designed as expert systems. In these, individually-crafted rules are used to extract relevant features of the products, while other rules are used to choose the best production method or to estimate the price and production time.

However, such expert systems are very difficult to design and are costly to maintain. In general, they work by first categorizing the unseen product into one of a small number of categories, then using category-specific rules to arrive at the final estimate. However, the introduction of new rules to the system is both complex in itself (it requires expert knowledge) and is likely to have an impact on existing rules as well.

It is therefore desirable to provide an improved system to provide requested information on a product to be manufactured.

According to an embodiment of a first aspect of the present invention there is provided a computer-implemented method of providing requested manufacture-related information relating to a desired product (for example, a product to be manufactured), the method comprising: providing a database of three-dimensional - 3D - items (for example, items which have been previously manufactured or prepared for manufacture), the database comprising at least geometric information specifying the geometry of each item; receiving product information specifying the desired product, the information comprising at least geometric information specifying the geometry of the product; using at least the geometric information of the items and the received product information to determine which item in the database is the most similar to the desired product; and retrieving stored information relating to manufacture of the item determined to be most similar to the desired product, and using the retrieved information to provide the requested manufacture-related information.

According to an embodiment of a second aspect of the present invention there is provided a manufacturing aid to provide requested manufacture-related information relating to a desired product (for example, a product to be manufactured), the apparatus comprising: a database of three-dimensional - 3D - items (for example, items which have been previously manufactured or prepared for manufacture), the database comprising at least geometric information specifying the geometry of each item; a first processor to receive product information specifying the desired product, the information comprising at least geometric information specifying the geometry of the product, and to use at least the geometric information of the items and the received product information to determine which item in the database is the most similar to the desired product; and a second processor to retrieve stored information relating to manufacture of the item determined to be most similar to the desired product, and use the retrieved information to output the requested manufacture-related information.

According to an embodiment of a third aspect of the present invention there is provided a computer program which, when run on a computer, causes that computer to carry out a method embodying the first aspect of the present invention.

Embodiments bypass the limitations of current expert systems by automatically extracting relevant features from the product. For an organization making use of such a system, all that is required is an existing database of products together with their corresponding metadata. As the features are extracted automatically, there is no need for the creation and updating of rules.

The stored information retrieved in an embodiment may specify a manufacturing process associated with manufacture of the item, in which case the method may further comprise manufacturing the product using the specified manufacturing process. The manufacturing process may be at least one of: (i) the most energy efficient process for manufacturing the item; (ii) the most environmentally-friendly process for manufacturing the item; (iii) the process for manufacturing the item which uses the least amount of material; (iv) the process for manufacturing the item which uses the least amount of computing resources; (v) the process for manufacturing the item which uses the least amount of human resources; (vi) the most cost-efficient process for manufacturing the item; and (vii) the process which manufactures the item most quickly.

Alternatively, or in addition, the stored information may comprise at least one of: (a) the cost of manufacturing the item; (b) the intended selling price of the item; (c) the length of time required to manufacture the item; and (d) the length of time required to manufacture the item and deliver the manufactured item to an intended recipient.

The product information may include non-geometric information comprising at least one of: numerical information; and non-numerical information. In this case, in association with each item, the database may include non-geometric information comprising at least one of: numerical information relating to the item; and non-numerical information relating to the item.

A trained machine learning model may be used to determine which item in the database is the most similar to the desired product, particularly where the geometric information for the product may be transformed to a canonical orientation. A set of data derived from the items in the database may be used to train the machine learning model. Using the product information to determine which item in the database is most similar to the desired product may include deriving a product feature vector from the product information and feeding the feature vector into the trained machine learning model.

Alternatively the product information of the desired product may be used to derive, for at least one item in the database, a value of a similarity metric indicative of the similarity between the product and the item. In this case, a product feature vector representing at least geometric features of the product and an item feature vector representing at least geometric features of the item may be obtained, wherein the value of the similarity metric is computed as a sum, or weighted sum, of the product feature vector and the item feature vector.

The product feature vector and the item feature vector may also represent non-geometric features of the product and item respectively.

The product feature vector may be obtained by using a trained deep neural network to extract at least geometric features of the product from a set of two-dimensional - 2D - rendered images of the product. The set of 2D rendered images of the product may be generated by rotating a 3D model of the product fully about each of a plurality of different axes independently. Alternatively, the set of 2D rendered images of the product may be generated by placing around a 3D model of the product a plurality of rendering cameras directed at key features of the product. The images may be grouped into at least one group. The value of the similarity metric may be computed as a weighted sum of the product feature vectors for each group and a corresponding group of item feature vectors.

As mentioned above, one aspect of the invention is concerned with identifying the best manufacturing process for a customized product. Here, the best manufacturing process may for example mean the most energy efficient, the least wasteful of materials, the most efficient in terms of computer resource usage, the most efficient in terms of other machine usage, the most efficient in terms of human resource usage, etc. This identification is done by first extracting relevant features of the product to be manufactured, then using those extracted features to search for similar models in a database of existing products, and finally combining information extracted from these models to compute the result.

Another aspect of the invention utilizes a similar system to generate quotations for a new product to be manufactured. In this case, information extracted from the most similar products is used to generate a quotation which includes information such as the expected delivery time or price for the product.

In each case the system functions automatically, using data from an existing database. The output may be based on a combination of geometric features (extracted from geometric information) and, optionally, numeric and non-numeric features (extracted from the numeric and non-numeric information). In particular, the geometric features may be automatically extracted from the model and do not require the manual creation (and maintenance) of complex rules.

Reference will now be made, by way of example, to the accompanying drawings, in which:

Figure 1(a) is a flowchart for use in explaining a method according to an embodiment;
Figure 1(b) is a block diagram of apparatus according to an embodiment;
Figure 1 (c) is an overview of a system according to an embodiment;
Figures 2(a) and 2(b) are flowcharts for use in explaining embodiments;
Figure 3 is a flowchart for use in explaining training of a machine learning model;
Figure 4 is a flowchart for use in explaining how a feature vector is derived in an embodiment;
Figure 5 shows a first view of rendering cameras surrounding a product to be manufactured;
Figures 6(a) and 6(b) are flowcharts for use in explaining embodiments;
Figure 7 shows a second view of rendering cameras surrounding a product to be manufactured;
Figure 8 is a flowchart for use in explaining an embodiment;
Figure 9 is a flowchart for use in explaining a method of converting images to feature vectors;
Figure 10 is a flowchart for use in explaining a method of obtaining images of a product to be manufactured; and
Figure 11 is a block diagram of a computing device embodying the present invention.

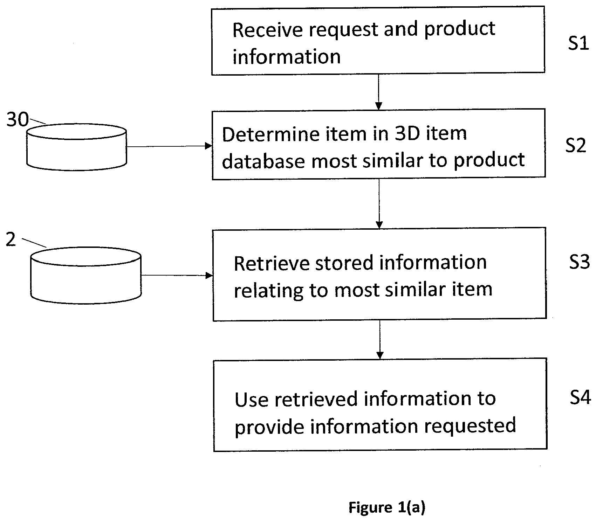

Referring to the flowchart of Figure 1 (a), in a method of providing requested manufacture-related information relating to a desired product, a database 30 of three-dimensional - 3D - items, for example items which have been previously manufactured or prepared for manufacture, is provided. The database 30 comprises at least geometric information specifying the geometry of each item. In step S1 of the method product information specifying the desired product is received. The information comprises at least geometric information specifying the geometry of the product. In step S2 at least the geometric information of the items in the database 30 and the received product information is used to determine which item in the database 30 is the most similar to the desired product. In step S3 information relating to manufacture of the item determined to be most similar to the desired product is retrieved from storage 2 (which may or may not form part of the same database as database 30), and in step S4 the retrieved information is used to provide the requested manufacture-related information.

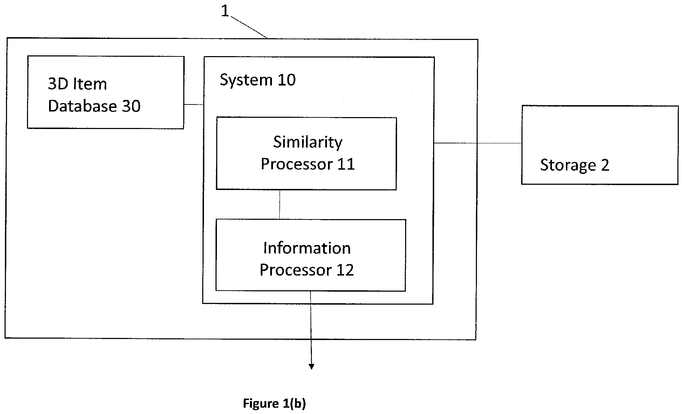

Apparatus for carrying out the method of Figure 1 (a) is exemplified in Figure 1 (b). Figure 1(b) shows a manufacturing aid 1 configured to provide requested manufacture-related information relating to a desired product. The manufacturing aid 1 comprises the database 30 of 3D items, and a system 10 comprising a similarity processor 11 and an information processor 12. Similarity processor 12 is configured to receive from a user of the aid 1 the product information specifying the desired product and to use at least the geometric information of the items in the database 30 and the received product information to determine which item in the database 30 is the most similar to the desired product. The information processor 12 is configured to retrieve from storage 2 information relating to manufacture of the item determined to be most similar to the desired product, and to use the retrieved information to output the requested manufacture-related information.

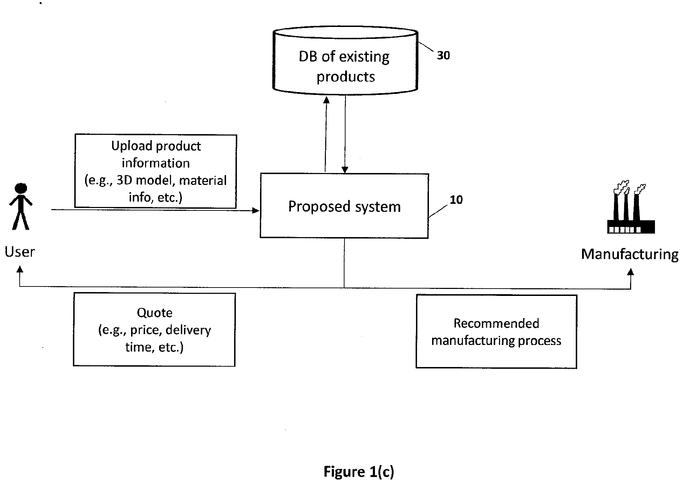

An outline of the system 10 according to an embodiment is shown in Figure 1(c). In this case the system 10 is configured to provide, in response to user input on a product to be made, information to the user in the form of a quotation (price, delivery time, etc.), and/or a recommended best manufacturing process for the product. However, alternative embodiments of the system may be configured to provide only a quotation or only a recommended best manufacturing process.

A user of the system 10 may for example be either a customer or an employee of the company running the system 10. In this example the product is a bespoke one and as such is slightly different from the products manufactured in the past (at least as far as the system is concerned). The provided information is expected to be of the following types:

- Geometric information (e.g. a CAD model),
- Numeric information (e.g. tolerances)
- Non-numeric information (e.g. material information)

Product-related information is stored in a product database 30. This information comprises geometric information (e.g. a CAD model in formats such as STEP, BREP, ACIS, ParaSolid or STL formats) and other information in both text and numeric formats that is referred to hereafter as metadata. The metadata may be split into three categories:

1. Product specification metadata, which includes material properties, tolerances and any other information required to describe the product to a level that enables it to be manufactured
2. Manufacturing process metadata, which includes information regarding the manufacturing process to be used such as the stages of the manufacturing process, machine parameters, energy usage, material usage, computer resource usage, human resource usage, etc.
3. Manufacturing cost, selling price, delivery time, etc.

For new products the product specific metadata is expected to be provided by the user as part of the order creation process, but will already be present in the product database 30 for existing products. The manufacturing process metadata for products created in the past represents accumulated manufacturing knowhow and is created by internal experts, for example those running the system 10. Last, the manufacturing cost, selling price and achieved delivery time are likely to be dependent upon the manufacturing process that was used.

Upon receiving the new product information input by a user of the system 10, based on information extracted from similar products found in the database (DB) of existing products, the system 10 generates one or both of the following outputs:

- A recommendation for the best manufacturing process to be used to manufacture that product (for example, to be sent to an internal user)
- One or more quotes with information such as cost, delivery time and so on (for example, to be sent to a customer); each quote will be based on a specific manufacturing process, but this might not be the same as that would be the recommended best manufacturing process (for example, if the cost or delivery time associated with that best process would exceed the customer's requirements).

As the 3D model is provided by the user, it is not generally possible to assume that it has a particular orientation. However, for a given 3D model, the system is expected to provide an identical (or at least a very similar) answer when provided with models that differ only by orientation. In other words, the proposed system needs to be orientation invariant, and there are two options for achieving this:

1. By automatically reorienting the input model to a unique canonical (i.e. preset standard) orientation; or
2. Using a method that returns the same (or a very similar) result regardless of the orientation of the input model

Depending on the category of 3D model, it may or may not be possible to orient the model to a canonical orientation (option 1 above). Hence, the system 10 is preferably configured to operate in two different ways, depending upon the category of the input 3D model.

Case 1: the 3D model may be automatically re-oriented to a unique canonical orientation

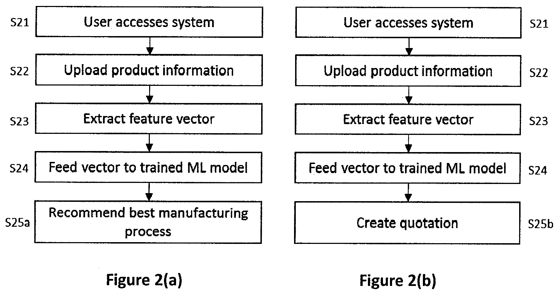

Where it is possible to re-orient the 3D model automatically to a unique canonical orientation, the output is generated as shown in Figure 2(a) or 2(b). Upon accessing the system (step S21), the user uploads information regarding the product to be manufactured (step S22). This information contains at least geometric information and product specification metadata. Following, a feature vector is extracted from the given information (step S23) which is then fed to a machine learning (ML) model (step S24) which has been previously trained. The output of the model is then used to determine a recommendation for the best manufacturing process for that particular product (step S25a). In addition, or alternatively, the output of a similar ML model is used to generate a quote for the user, containing information such as estimated price and delivery time for the product (step S25b).

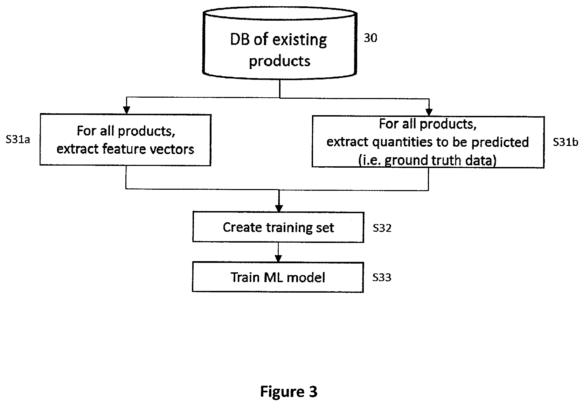

The ML model used at the step S24 may be trained as shown in Figure 3 using information regarding products manufactured in the past which is stored in product database 30. Some or all product information items available here are converted to feature vectors (step 31a) while the quantities that need to be estimated (such as delivery time or price) are also extracted (step S31b), forming what is called "ground truth data". The feature vectors and ground truth data are used to form a training set (step S32) which is used (step S33) to train one of many possible types of ML model (e.g. neural network, support vector machine, etc.).

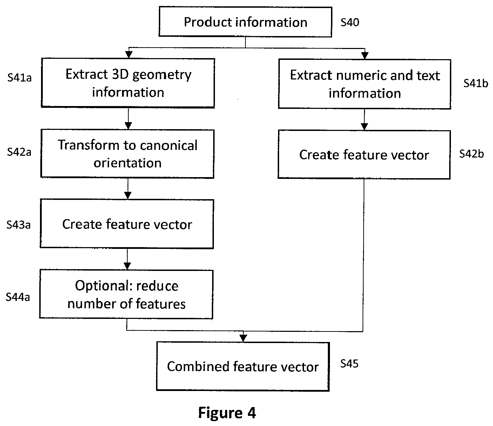

A process which may be used to convert product information to feature vectors is shown in Figure 4. First the available information is split into geometric (3D geometry) and non-geometric (numeric and text) information (steps S41 a and S41b).

To extract the geometric feature vector, since consistent orientation across all input models cannot be assumed, a geometric rotation operation is applied to orient the model to a unique canonical orientation (step S42). One of the methods which may be used for this purpose is Principal Component Analysis ("PCA") where the model is rotated so that vectors representing the first three principal components become the X, Y and Z axes.

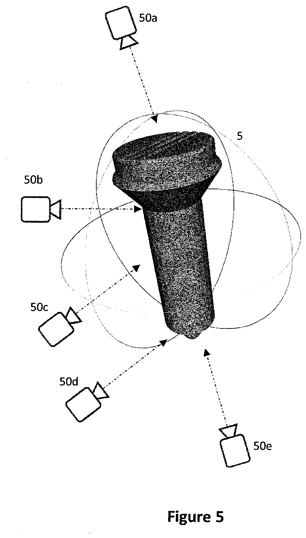

Then, rendering cameras (virtual cameras) are positioned so that their field of view will include key areas for the category of products being considered. One example of how this could look like for a mechanical pin 5 is shown in Figure 5, using rendering cameras 50a to 50e.

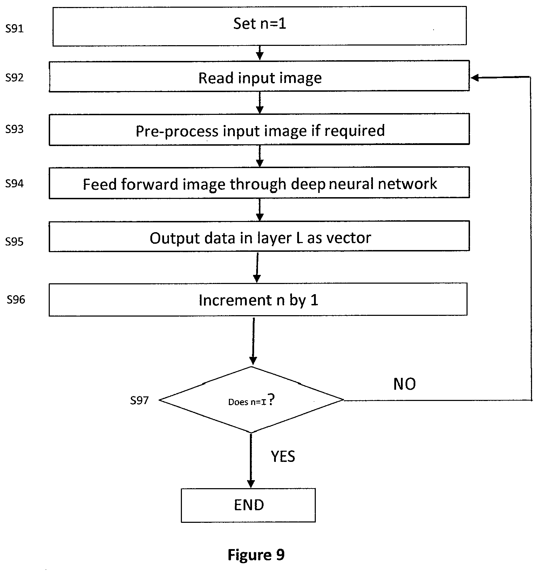

Each of the captured images is converted to a feature vector (step S43a), for example (but not exclusively) using methods such as the one described below with reference to Figure 9, where the conversion is achieved using a convolutional neural network. Examples of deep neural networks very suitable for this task are AlexNet (Krizhevsky, Alex, Ilya Sutskever, and Geoffrey E. Hinton. "Imagenet classification with deep convolutional neural networks." Advances in neural information processing systems, 2012) and GoogLeNet (Szegedy, Christian, et al. "Going deeper with convolutions." Proceedings of the IEEE Conference on Computer Vision and Pattern Recognition. 2015), however other networks could be used instead.

Extraction of feature vectors from the captured images may follow the process shown in Figure 9. Let us assume that there are I images. After reading a first image (steps S91 and S92), pre-processing operations, such as rescaling, mean extraction or colour channel swapping, are usually applied in order to make the image compatible with the neural network (step S93). The image data, after any required pre-processing, is placed on the input layer (also called data layer) of the deep neural network and fed forward through the neural network (step S94) until reaching the designated output layer L, which is usually the last, or penultimate layer, in the neural network. The vector of values in layer L is output as the feature vector associated with the input image (step S95). It is preferable that the vector is normalized. The feature extraction process of steps S92 to S95 is repeated until feature vectors for all the I images of the input model have been obtained (steps S96 and S97).

Going back to Figure 4, since the position of the rendering cameras with respect to the 3D model is unique, a geometric 3D vector may be created simply by appending all feature vectors created from the images. Optionally, PCA or another compression technique may be used to reduce the size of the obtained feature vector (step S44a).

Methods known in the art may be used to convert the available numerical and text information to a second feature vector (step S42b), which will then be appended to the feature vector created using the geometric information (step S45). This results in one feature vector that captures both geometric and non-geometric information.

For example, if the information provided in the metadata is numerical, it is customary to perform a rescaling operation so that all feature values will be in the same numerical range. If the information is in text format, ways to convert it to numerical data include techniques such as bag-of-words, N-grams of binary features (where "1" would indicate the presence of a word while "0" would indicate its absence).

Case 2: the 3D model may not be re-oriented to a unique canonical orientation

It may be the case that it is not possible for the 3D model to be completely re-oriented to a unique canonical orientation. However, it may be that partial reorientation, such as uniquely fixing one or two axes, is possible. For example, in the case of the pin model shown in Figure 5, it may be very easy to uniquely determine one axis as being the longest one, if for all pins the dominant dimension is the length and if the top part (the cap) is always thicker than the bottom part (the tip). However, determining the remaining four degrees of freedom may be more difficult, or even impossible for some models.

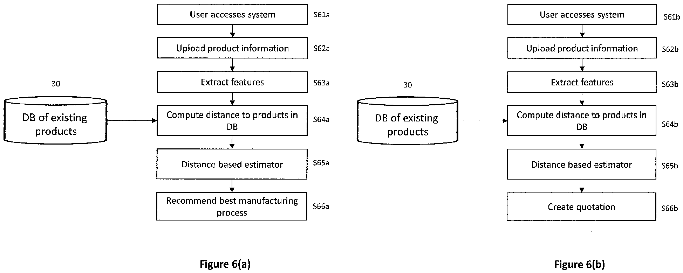

In cases such as these, it is not possible to generate a unique feature vector, hence a different, distance-based approach is taken, as shown in Figures 6(a) and 6(b). In this process, instead of using existing products from the DB 30 to train a ML model, the result is based on the distance between the input data and a product available in the product DB 30.

One very simple method for doing this, which has been proven to work well in practice, is to search the product DB 30 for the most similar product to the one the result is to be generated for and simply use that data in creating the result. From a ML perspective, such a process corresponds to a k-NN (k-Nearest Neighbour) method with k=1. However, larger values for k may be used, where, for example, the estimation is done by averaging the information from the k nearest neighbours.

Referring to Figures 6(a) and 6(b), after a user accesses the system 10 (step S61a/step S61b) and uploads the required information relating to the new product to be manufactured (step S82a/step S62b), feature vectors are extracted from the geometric and non-geometric information for the new product (step S63a/step S63b) and are used to compute the distance between the new product and each of the products in the product database 30 (step S64a/step S64b). The product in the database 30 which has the closest distance to the new product (i.e. the greatest degree of similarity) is determined (step S65a/step S65b) and information relating to the closest product is used to provide either a recommendation for the best manufacturing process to be used to make the new product (step S66a) or a quotation (e.g. price, delivery time) for manufacture of the product (step S66b).

Central to the process above is the way in which the degree of similarity or "distance" metric between two products is computed. This distance metric needs to take into account the fact that the position of some geometric features may change if the orientation of the input model changes.

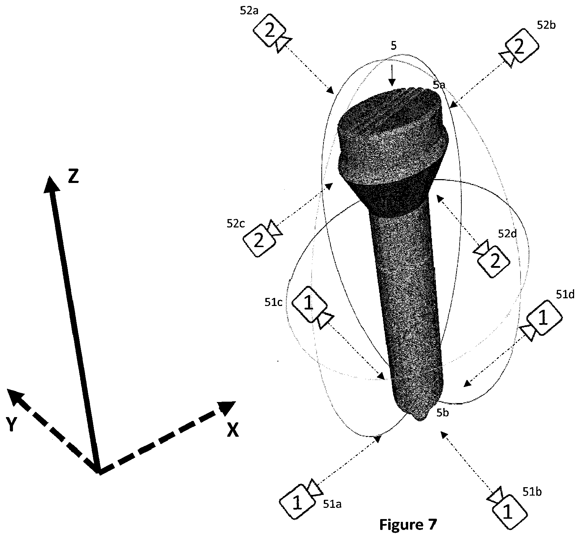

For illustration purposes, consider again the example of the pin 5 first shown in Figure 5, but this time as shown in Figure 7 with only the Z axis uniquely determined. As such, the orientation of the object (i.e. the rotation) in the X-Y plane may vary from model to model.

As in the previous example of Figure 5, rendering cameras are used to create views of key areas of the pin 5, which in this case are considered to be the top (5a) and bottom (5b) parts. These cameras will automatically be placed at the desired height since the Z axis is uniquely determined. However, since no assumption can be made on the rotation of the pin in the X-Y plane, multiple cameras (4 in this case) are placed around the model in two groups: Group 1 (51 a to 51 d) around the bottom and Group 2 (52a to 52d) around the top.

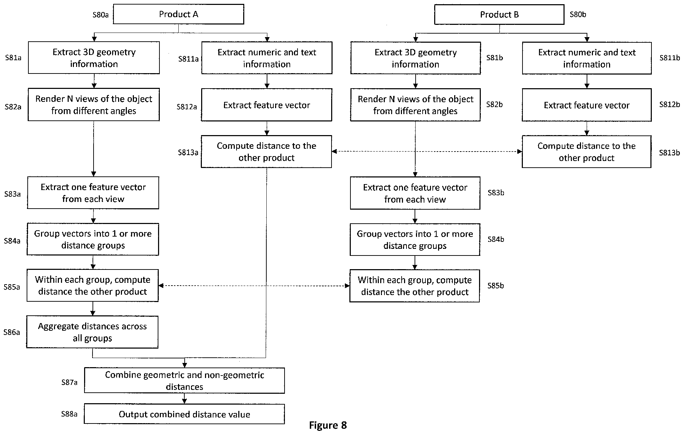

The process used in this case to compute the distance between such a product and those held in product database 30 is shown in Figure 8. Note that while Figure 8 shows a feature extraction process being carried out for two products, A and B, in practice it is likely that the features for one of the products (product B in this example) would have been extracted previously, when that product was added to the product DB 30, and then directly retrieved from the product DB 30 when needed.

The main difference between the processes in Figure 8 and the one in Figure 4 is that, as mentioned above, it is necessary to place multiple cameras around the object to make sure the relevant information is extracted regardless of the orientation of the object. When it is possible to fix some degrees of freedom (e.g. in Figure 8 the Z axis is fixed), then it is possible to define some of the camera positions uniquely (e.g. top and bottom). This in turn enables the cameras to be grouped into distance groups (e.g. Group 1 → bottom and Group 2 → top). If it is not possible to uniquely define any axis, then all cameras will belong to the same group.

To compute the distance between two products, at the start the information is separated into geometric information, i.e. the 3D model, (step S81a product A, step S81b product B) and non-geometric information, such as numerical and text data (steps S811a, S811b). In this embodiment the two types of information are processed separately.

For the geometric information, N views (images) are generated (step S82a product A, step S82b product B) using N rendering cameras pointed at regions of the model considered to be important. These regions are likely to be specific to the category of the product and will be probably be preset by a designer of the system for each product category. From each of the N views a feature vector of a given length is the extracted (step S83a product A, step S83b product B), thereby creating a set of N feature vectors. As mentioned above, there may be many ways in which an image may be converted to a feature vector, one of which is by using a convolutional neural network, as described above with reference to Figure 9. These vectors are then grouped into one or more distance groups (step S84a product A, step S84b product B).

For each distance group $G_A$ of product A, the distance to the corresponding distance group $G_B$ of product B is computed (step S85a product A, step S85b product B). For the example given in Figure 8, this means that two distances are computed: one is the distance between the four feature vectors corresponding to Group 1 of product A and the four feature vectors corresponding to Group 1 of product B; the other is the distance between the four feature vectors corresponding to Group 2 of product A and the four feature vectors corresponding to Group 2 of product B. The distance between two groups of feature vectors is computed as the minimum of the distances between the vectors in the two groups. That is, the distance between distance groups $G_A^1$ and $G_B^1$, representing images in Group 1 for objects A and B respectively, is defined as:

$$dist(G_A^1, G_B^1) = \min_{v_i \in G_A^1, v_j \in G_B^1} dist(v_i, v_j)$$

In the formula above, any definition of distance between two feature vectors may be used, but it is preferably Euclidian distance or cosine distance.

The aggregate distance between the geometry of product A and the geometry of product B is then computed as the sum or average of the group distances (step S86a). For example, for two groups it could be computed using the following summation formula:

$$dist(G_A, G_B) = dist(G_A^1, G_B^1) + dist(G_A^2, G_B^2)$$

Depending on the application (for example, if some features of the product are more important than others), the sum or average may be weighted, with weights chosen which are proportional to the importance of the feature group, such as in the following formula, where a and b are specified weights:

$$dist(G_A, G_B) = a * dist(G_A^1, G_B^1) + b * dist(G_A^2, G_B^2)$$

Alternatively, the weights may also be automatically learned from the data, for example by performing a grid-search and choosing the values that maximize prediction accuracy.

For non-geometric information, a method selected from standard methods known in the art, such as N-grams, is used to generate/extract one feature vector (step S812a product A, step 812b product B), then any distance metric, such as Euclidian or cosine distance, is used to compute the distance between the non-geometric information of products A and B (step S813a product A, step 813b product B). The similarity metric, i.e. the overall distance between product A and product B, is then computed as the sum or average of the geometric distance and non-geometric distance (step S87a) and output (step S88a). Again, depending on the application, the sum or average may be weighted, with weights chosen which are proportional to the importance of the feature group. Alternatively, the weights may also be automatically learned from the data.

For example, the overall distance may be computed as the following weighted sum:

$$dist(A, B) = v * dist(G_A, G_B) + w * dist(NG_A, NG_B)$$

where v and w are weights and $dist(NG_A, NG_B)$ represents the distance between the non-geometric feature vectors for products A and B.

The output of the process in this case is a combined distance metric which represents the similarity between product A and product B. In practice, assuming there are n products Bi in the product database 30, the distance metric between product A and each of the n products Bi is determined and then these n distance metrics are ranked according to size so that the product Bi for which the distance metric is smallest (i.e. the most similar product Bi) may be identified, this product being used to provide the required information on the recommended manufacturing process or quotation for product A. Instead of using only the information from the most similar product, it is also possible to use a function (for example, average, or majority vote) of the k most similar products.

An example in which the system 10 is used to obtain a recommendation for the best process for the manufacture of mechanical pins will now be described. A user uploads information about a new pin to be manufactured which consists of geometric information (for example CAD data stored in STEP format) and non-geometric information. The non-geometric information consists of text information representing the material the pins are to be made of and numeric information representing the production tolerances (3 numeric values). Upon uploading this information, the user receives a recommendation for the best manufacturing process with an associated quotation for the production cost and delivery time using the recommended process.

In this example it is assumed that a product DB 30 of previously-created products is available. For each product, the DB contains the geometric information, the non-geometric information, the manufacturing process used, and the actual production costs and delivery time.

Example Case 1: All pins may be re-oriented to a unique canonical orientation

In this case it is assumed that there is a method (e.g., a software module, possibly based on PCA method) that allows the CAD models to be automatically re-oriented to a unique canonical orientation. This method, given a CAD model in an arbitrary orientation, will always output the same reoriented CAD model.

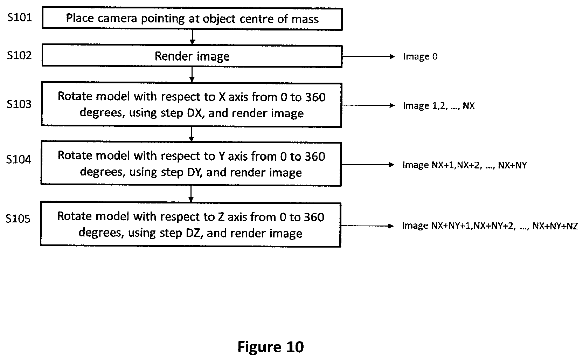

A set of images are generated for each input 3D model, for example using a technique such as that illustrated in Figure 10. This technique comprises rendering images while rotating the 3D model independently about a plurality of different axes, in this example all three axes of the XYZ coordinate system. Firstly, the viewpoint ("virtual camera") from which the images will be rendered is positioned so as to point at the centre of mass of the 3D model (step S101) and the first image of the 3D model is rendered (step S102). The 3D model is then rotated with respect to the X axis from 0° to 360° in angular steps DX, an image being rendered at each step, so as to obtain images 1, 2, ..., NX (step S103). The 3D model is then rotated with respect to the Y axis from 0° to 360° in angular steps DY, an image being rendered at each step, so as to obtain images NX+1, NX+2, ..., NX+NY (step S104). Finally, the 3D model is rotated with respect to the Z axis from 0° to 360° in angular steps DZ, an image being rendered at each step, so as to obtain images NX+NY+1, NX+NY+2, ..., NX+NY+NZ (step S105). Angular steps DX, DY, DZ are preferably in the range from 30° to 45°. Advantageously DX=DY=DZ=45°, resulting in 22 images per 3D model.

After generating 22 images of each input 3D model in this way, a pre-trained CNN (e.g. based on GoogleNet architecture) is used to convert each image into a vector of 1024 features, as described above with reference to Figure 9. These 22 vectors are then appended, keeping the order intact, to obtain a combined vector of 22x1,024 = 22,528 elements. This vector represents the geometric feature vector.

The non-geometric data is converted to a vector by converting the material name to a numerical value and appending the 3 numeric values representing the tolerances, to generate a vector of 4 numeric values representing the non-numeric features.

By appending the 22,528 element long geometric feature vector and the 4 feature long non-geometric feature vector, the combined feature vector of 22,532 elements is obtained.

To create a ML model, the models in the product database 30 are split into a training set containing 70% of the models and a validation set of 30% of the models. The procedure described above is then used to extract a combined feature vector from all models in the product database 30. The feature vectors from the training set are used to train a SMV (Support Vector Machine) classifier that is then tested on the remaining 30% of the models. The trained SVM classifier is subsequently used to predict the production cost and delivery time for previously-unseen models uploaded by a user.

Example Case 2: No axis may be fixed

In this case it is assumed that the variation in model geometry does not allow any of the axes of the input product to be fixed. In this case, the distance based method is used. Here, when the user uploads a model, the product DB 30 is searched for the most similar model and the associated best manufacturing process, delivery time and cost are returned to the user.

For the method above to work, it is necessary to be able to compute the distance between the input model and a model in the product database 30. This is computed as a weighted sum $aD_g + bD_{ng}$ where $D_g$ is the distance between the geometry of the two models, $D_{ng}$ is the distance between the non-geometric features, and $a, b$ are weights whose values are found using a grid-search method.

To compute distance in geometry $D_g$ between two models A and B, 22 views are extracted from each model which are then converted to 22 feature vectors of 1,024 elements using the techniques described above with reference to Figures 9 and 10. This time, however, the two 22 feature vectors cannot be combined into one 22,528 feature vector for the entire model, since the order of the 22 images is undefined. Instead, the distance in geometry between the two models is computed as the minimum cosine distance between the 22 feature vectors for model A and the 22 feature vectors for model B.

The non-geometric data is again converted into a vector by converting the material name to a numerical value and appending the 3 numeric values representing the tolerances, to generate a vector of 4 numeric values representing the non-geometric features. A value for $D_{ng}$ is then computed as the cosine distance between these two vectors. The weighted sum $aD_g + bD_{ng}$, which represents the distance between the two models, is then computed.

As mentioned above, the distance metric between product A and each of the n products Bi in the product database 30 is determined and then these n these distance metrics are ranked according to size so that the product Bi for which the distance metric is smallest (i.e. the most similar product Bi) may be identified, this product being used to provide the required information on the recommended manufacturing process and/or quotation for product A.

Example Case 3: One axis (Z axis) may be fixed

In this case it is assumed that it is possible to fix only the Z axis, which is always the largest dimension of the pin, and that it is not possible to rotate the model in the X-Y plane to a unique canonical position. Therefore, as in Case 2, a similarity-based approach is again taken. This situation corresponds to the model in Figure 7.

Compared to Case 2, as here the Z axis is fixed, the created views may be grouped into two groups: Group 1 contains the four images generated by the cameras placed at the bottom of the pin while Group 2 contains the four images generated by the cameras placed at the top of the pin. The distance between the two models is then computed as the sum $aD_{g1} + bD_{g2} + cD_{ng}$ where $D_{g1}$ is the distance between the geometry of the two models but restricted to images from Group 1, $D_{g2}$ is the distance between the geometry of the two models but restricted to images from Group 2, $D_{ng}$ is the distance between the non-geometric features, and *a,b,c* are weights whose values are found using a grid-search method.

Embodiments of the present invention may be implemented in hardware, or as software modules running on one or more processors, or on a combination thereof. That is, those skilled in the art will appreciate that a microprocessor or digital signal processor (DSP) may be used in practice to implement some or all of the functionality described above.

The invention may also be embodied as one or more device or apparatus programs (e.g. computer programs and computer program products) for carrying out part or all of the methods described herein. Such programs embodying the present invention may be stored on computer-readable media, or could, for example, be in the form of one or more signals. Such signals may be data signals downloadable from an Internet website, or provided on a carrier signal, or in any other form.

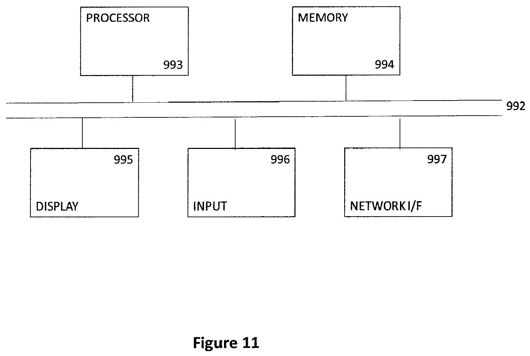

Figure 11 is a block diagram of a computing device, such as a data storage server, which embodies the present invention, and which may be used to implement some or all of the steps of a method embodying the present invention, and perform some or all of the tasks of apparatus of an embodiment. For example, the computing device of Figure 11 may be used to implement all the steps of the method illustrated in Figure 1(a), and perform all the tasks of the similarity processor 11 and information processor 12 of the manufacturing aid 1 shown in Figure 1 (b), or only to implement some of the steps in the method of Figure 1(a) and only to perform some of the tasks of the manufacturing aid shown in Figure 1 (b).

The computing device comprises a processor 993, and memory, 994. Optionally, the computing device also includes a network interface 997 for communication with other such computing devices, for example with other computing devices of invention embodiments.

For example, an embodiment may be composed of a network of such computing devices. Optionally, the computing device also includes one or more input mechanisms such as keyboard and mouse 996, and a display unit such as one or more monitors 995. The components are connectable to one another via a bus 992.

The memory 994, which may for example serve as the 3D item database 30 and/or storage 2, may include a computer readable medium, which term may refer to a single medium or multiple media (e.g., a centralized or distributed database and/or associated caches and servers) configured to carry computer-executable instructions or have data structures stored thereon. Computer-executable instructions may include, for example, instructions and data accessible by and causing a general purpose computer, special purpose computer, or special purpose processing device (e.g., one or more processors) to perform one or more functions or operations. Thus, the term "computer-readable storage medium" may also include any medium that is capable of storing, encoding or carrying a set of instructions for execution by the machine and that cause the machine to perform any one or more of the methods of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device and execute processing operations, for example executing computer program code stored in the memory 994 to implement the methods described with reference to Figure 1 (a), 2(a), 2(b), 3, 4, 6(a), 6(b), 8, 9 and/or 10 and defined in the claims. For example, such computer program code may implement at least one of the similarity processor 11 and the information processor 12 depicted in Figure 1 (b) and described earlier. The memory 994 stores data being read and written by the processor 993. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and steps discussed herein.

The display unit 995 may display a representation of data stored by the computing device and may also display a cursor and dialog boxes and screens enabling interaction between a user and the programs and data stored on the computing device. The input mechanisms 996 may enable a user to input data and instructions to the computing device.

The network interface (network I/F) 997 may be connected to a network, such as the Internet, and is connectable to other such computing devices via the network. The network I/F 997 may control data input/output from/to other apparatus via the network.

Other peripheral devices such as microphone, speakers, printer, power supply unit, fan, case, scanner, trackerball, etc. may be included in the computing device.

Methods embodying the present invention may be carried out on a computing device such as that illustrated in Figure 11. Such a computing device need not have every component illustrated in Figure 11, and may be composed of a subset of those components. A method embodying the present invention may be carried out by a single computing device in communication with one or more data storage servers via a network. The computing device may be a data storage itself storing at least a portion of the data.

A method embodying the present invention may be carried out by a plurality of computing devices operating in cooperation with one another. One or more of the plurality of computing devices may be a data storage server storing at least a portion of the data.

The above-described embodiments of the present invention may advantageously be used independently of any other of the embodiments or in any feasible combination with one or more others of the embodiments.

**Claims**

1. A computer-implemented method of providing requested manufacture-related information relating to a desired product, the method comprising:

    providing a database of three-dimensional - 3D - items, the database comprising at least geometric information specifying the geometry of each item;
    receiving product information specifying the desired product, the information comprising at least geometric information specifying the geometry of the product;
    using at least the geometric information of the items and the received product information to determine which item in the database is the most similar to the desired product; and
    retrieving stored information relating to manufacture of the item determined to be most similar to the desired product, and using the retrieved information to provide the requested manufacture-related information.

2. A method as claimed in claim 1, wherein the stored information specifies a manufacturing process associated with manufacture of the item.

3. A method as claimed in claim 2, further comprising manufacturing the product using the specified manufacturing process.

4. A method as claimed in any preceding claim, wherein the product information includes non-geometric information comprising at least one of: numerical information; and non-numerical information.

**5.** A method as claimed in claim 4, wherein, in association with each item, the database includes non-geometric information comprising at least one of: numerical information relating to the item; and non-numerical information relating to the item.

**6.** A method as claimed in any preceding claim, wherein a trained machine learning model is used to determine which item in the database is the most similar to the desired product.

**7.** A method as claimed in claim 6, wherein using the product information to determine which item in the database is most similar to the desired product includes deriving a product feature vector from the product information and feeding the feature vector into the trained machine learning model.

**8.** A method as claimed in any one of claims 1 to 5, wherein the product information of the desired product is used to derive, for at least one item in the database, a value of a similarity metric indicative of the similarity between the product and the item.

**9.** A method as claimed in claim 8, further comprising obtaining a product feature vector representing at least geometric features of the product and obtaining an item feature vector representing at least geometric features of the item, wherein the value of the similarity metric is computed as a sum, or weighted sum, of the product feature vector and the item feature vector.

**10.** A method as claimed in claim 9, when read as appended to claim 7, wherein the product feature vector and the item feature vector also represent non-geometric features of the product and item respectively.

**11.** A method as claimed in claim 7, 9 or 10, wherein the product feature vector is obtained by using a trained deep neural network to extract at least geometric features of the product from a set of two-dimensional - 2D - rendered images of the product.

**12.** A method as claimed in claim 11, wherein the set of 2D rendered images of the product is generated by rotating a 3D model of the product fully about each of a plurality of different axes independently.

**13.** A method as claimed in claim 11, wherein the set of 2D rendered images of the product is generated by placing around a 3D model of the product a plurality of rendering cameras directed at key features of the product.

**14.** A method as claimed in claim 13, when read as appended to claim 9 or 10, wherein the images are grouped into at least one group and the value of the similarity metric is computed as a weighted sum of the product feature vectors for each group and a corresponding group of item feature vectors.

**15.** A manufacturing aid to provide requested manufacture-related information relating to a desired product, the aid comprising:

a database of three-dimensional - 3D - items, the database comprising at least geometric information specifying the geometry of each item;
a first processor to receive product information specifying the desired product, the information comprising at least geometric information specifying the geometry of the product, and to use at least the geometric information of the items and the received product information to determine which item in the database is the most similar to the desired product; and
a second processor to retrieve stored information relating to manufacture of the item determined to be most similar to the desired product, and use the retrieved information to output the requested manufacture-related information.

| Receive request and product information | S1 |

30

| Determine item in 3D item database most similar to product | S2 |

2

| Retrieve stored information relating to most similar item | S3 |

| Use retrieved information to provide information requested | S4 |

**Figure 1(a)**

1

```
┌─────────────────────────────────────────────────────────────┐
│                                                              │        ┌──────────────────┐
│  ┌────────────────────┐   ┌──────────────────────────────┐   │        │                  │
│  │   3D Item          │   │  System 10                   │   │        │                  │
│  │   Database 30      │   │                              │   │        │   Storage 2      │
│  │                    │───│  ┌────────────────────────┐  │───┼────────│                  │
│  └────────────────────┘   │  │      Similarity        │  │   │        │                  │
│                           │  │      Processor 11      │  │   │        └──────────────────┘
│                           │  └────────────────────────┘  │   │
│                           │              │               │   │
│                           │  ┌────────────────────────┐  │   │
│                           │  │      Information       │  │   │
│                           │  │      Processor 12      │  │   │
│                           │  └────────────────────────┘  │   │
│                           └──────────────┬───────────────┘   │
│                                          │                   │
└──────────────────────────────────────────┼──────────────────┘
                                           ▼
```

**Figure 1(b)**

**DB of existing products** 30

**Upload product information** (e.g., 3D model, material info, etc.)

User

**Proposed system** 10

Manufacturing

**Quote** (e.g., price, delivery time, etc.)

**Recommended manufacturing process**

Figure 1(c)

| | | | | |
|---|---|---|---|---|
| S21 | User accesses system | | User accesses system | S21 |
| S22 | Upload product information | | Upload product information | S22 |
| S23 | Extract feature vector | | Extract feature vector | S23 |
| S24 | Feed vector to trained ML model | | Feed vector to trained ML model | S24 |
| S25a | Recommend best manufacturing process | | Create quotation | S25b |

**Figure 2(a)**          **Figure 2(b)**

```
                    ┌─────────────────────┐
                    │    DB of existing   │  30
                    │      products       │
                    └─────────────────────┘
                     │                   │
           ┌─────────▼────────┐   ┌──────▼────────────────────────┐
   S31a    │  For all products, │   │      For all products,        │  S31b
           │ extract feature    │   │ extract quantities to be      │
           │    vectors         │   │ predicted                     │
           └────────────────────┘   │ (i.e. ground truth data)      │
                     │              └───────────────────────────────┘
                     │                   │
                     └────────┬──────────┘
                     ┌────────▼─────────┐
                     │ Create training set │  S32
                     └──────────────────┘
                              │
                     ┌────────▼─────────┐
                     │  Train ML model   │  S33
                     └──────────────────┘
```

**Figure 3**

Product information | S40

S41a | Extract 3D geometry information

Extract numeric and text information | S41b

S42a | Transform to canonical orientation

Create feature vector | S42b

S43a | Create feature vector

S44a | Optional: reduce number of features

Combined feature vector | S45

**Figure 4**

Figure 5

Figure 6(a)

| User accesses system | S61a |
| Upload product information | S62a |
| Extract features | S63a |
| Compute distance to products in DB | S64a |
| Distance based estimator | S65a |
| Recommend best manufacturing process | S66a |

30

DB of existing products

Figure 6(b)

| User accesses system | S61b |
| Upload product information | S62b |
| Extract features | S63b |
| Compute distance to products in DB | S64b |
| Distance based estimator | S65b |
| Create quotation | S66b |

30

DB of existing products

Figure 7

S80a Product A

S80b Product B

S81a Extract 3D geometry information

S811a Extract numeric and text information

S81b Extract 3D geometry information

S811b Extract numeric and text information

S82a Render N views of the object from different angles

S812a Extract feature vector

S82b Render N views of the object from different angles

S812b Extract feature vector

S813a Compute distance to the other product

S813b Compute distance to the other product

S83a Extract one feature vector from each view

S83b Extract one feature vector from each view

S84a Group vectors into 1 or more distance groups

S84b Group vectors into 1 or more distance groups

S85a Within each group, compute distance the other product

S85b Within each group, compute distance the other product

S86a Aggregate distances across all groups

S87a Combine geometric and non-geometric distances

S88a Output combined distance value

**Figure 8**

S91 | Set n=1

S92 | Read input image

S93 | Pre-process input image if required

S94 | Feed forward image through deep neural network

S95 | Output data in layer L as vector

S96 | Increment n by 1

S97 | Does n=I ?

NO

YES

END

**Figure 9**

| | | |
|---|---|---|
| S101 | Place camera pointing at object centre of mass | |
| S102 | Render image | → Image 0 |
| S103 | Rotate model with respect to X axis from 0 to 360 degrees, using step DX, and render image | → Image 1,2, …, NX |
| S104 | Rotate model with respect to Y axis from 0 to 360 degrees, using step DY, and render image | → Image NX+1,NX+2, …, NX+NY |
| S105 | Rotate model with respect to Z axis from 0 to 360 degrees, using step DZ, and render image | → Image NX+NY+1,NX+NY+2, …, NX+NY+NZ |

**Figure 10**

PROCESSOR

993

MEMORY

994

992

995

DISPLAY

996

INPUT

997

NETWORK I/F

**Figure 11**

Europäisches
Patentamt

European
Patent Office

Office européen
des brevets

## EUROPEAN SEARCH REPORT

Application Number

EP 17 16 3734

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/047140 A1 (FREE DAVID MITCHELL [US]) 24 February 2011 (2011-02-24) * abstract; figures 1-10 * * paragraphs [0001], [0018] - [0032], [0046], [0057] - [0083], [0090], [0091], [0131] - [0153], [0169] - [0178] * | 1-15 | INV. G06Q30/02 G06Q30/06 G06F17/30 G06K9/00 |
| X | EP 2 284 770 A1 (PERANTONIS STAVROS [GR]; PAPADAKIS PANAGIOTIS [GR]; PRATIKAKIS IOANNIS) 16 February 2011 (2011-02-16) * abstract; figures 1,2,5,10 * * paragraphs [0003] - [0005], [0007], [0010], [0011], [0012], [0015], [0015], [0020], [0022], [0023], [0030], [0035], [0045], [0048] - [0050] * | 1-15 | |
| X | US 2016/063035 A1 (REJAL SEENA [GB] ET AL) 3 March 2016 (2016-03-03) * abstract; figures 1,2,4 * * paragraphs [0009] - [0024], [0045], [0048], [0058] - [0068] * | 1-15 | |
| | | | TECHNICAL FIELDS SEARCHED (IPC) G06Q G06F G06K |

The present search report has been drawn up for all claims

| Place of search | Date of completion of the search | Examiner |
|---|---|---|
| The Hague | 5 July 2017 | Berlea, Alexandru |

EPO FORM 1503 03.82 (P04C01)

## ANNEX TO THE EUROPEAN SEARCH REPORT
## ON EUROPEAN PATENT APPLICATION NO.

EP 17 16 3734

This annex lists the patent family members relating to the patent documents cited in the above-mentioned European search report.
The members are as contained in the European Patent Office EDP file on
The European Patent Office is in no way liable for these particulars which are merely given for the purpose of information.

05-07-2017

| Patent document cited in search report | Publication date | Patent family member(s) | Publication date |
|---|---|---|---|
| US 2011047140 A1 | 24-02-2011 | US 2008269942 A1<br>US 2011047140 A1 | 30-10-2008<br>24-02-2011 |
| EP 2284770 A1 | 16-02-2011 | NONE | |
| US 2016063035 A1 | 03-03-2016 | GB 2514320 A<br>US 2016063035 A1<br>WO 2015008012 A2 | 26-11-2014<br>03-03-2016<br>22-01-2015 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KRIZHEVSKY, ALEX ; ILYA SUTSKEVER ; GEOFFREY E. HINTON.** Imagenet classification with deep convolutional neural networks. *Advances in neural information processing systems,* 2012

- **SZEGEDY ; CHRISTIAN et al.** Proceedings of the IEEE Conference on Computer Vision and Pattern Recognition. *Going deeper with convolutions,* 2015